# FASCICULE DE BREVET EUROPEEN

(11) **EP 3 912 532 B1**
(45) Date de publication et mention de la délivrance du brevet: **16.08.2023**
(21) Numéro de dépôt: 21185171.2
(22) Date de dépôt: 18.03.2019
(51) Int. Cl.: A47J 37/06, A47J 45/07

(54) **APPAREIL DE CUISSON DU TYPE FRITEUSE A AIR CHAUD AVEC UNE CAPACITE DE CUISSON EVOLUTIVE**
KOCHGERÄT VOM TYP HEISSLUFT-FRITEUSE MIT EINER SKALIERBAREN KOCHLEISTUNG
COOKING APPLIANCE OF THE TYPE HOT AIR FRYER WITH ADAPTIVE COOKING CAPACITY

(30) Priorité: 21.03.2018 FR 1852455
(43) Date de publication de la demande: 24.11.2021
(62) Demande divisionnaire de: 19163563.0
(73) Titulaire: SEB S.A., 69130 Ecully (FR)
(72) Inventeur: PRIETO, Guillaume, 21380 MARSANNAY LE BOIS (FR); CORNU, Jérémy, 69007 LYON (FR)
(74) Mandataire: SEB Développement

(56) Documents cités:
- EP-A1- 0 037 562
- WO-A1-2012/123464
- WO-A1-2014/198040
- CN-U- 204 105 798

## Description

### Domaine technique

La présente invention concerne un appareil de cuisson du type friteuse à air chaud. L'invention vise en particulier à permettre une adaptation de la capacité de cuisson en fonction de la quantité d'aliments à cuire.

### Etat de la technique

Les appareils de cuisson du type friteuse à air chaud sont connus de l'homme du métier. De tels appareils permettent de réduire fortement la quantité de matière grasse, voire de la supprimer complètement, pendant la cuisson des aliments qui peuvent être d'origine végétale ou animale, par exemple des frites, des légumes, de la viande ou du poisson. En effet, la cuisson s'effectue avec peu ou pas d'huile grâce à de l'air chaud circulant dans une cuve, ce qui permet de consommer des aliments plus diététiques, croustillants à l'extérieur et moelleux à l'intérieur. Etant donné la réduction ou la suppression de l'huile pour la cuisson, ces appareils dégagent moins d'odeurs et de graisses ; leur nettoyage est en outre simplifié.

Un appareil de cuisson du type friteuse à air chaud comprend généralement une cuve configurée pour recevoir un panier dans lequel sont disposés les aliments à cuire. Une fois le panier positionné dans la cuve et contenant les aliments, l'appareil de cuisson peut être fermé pour former une chambre qui intègre la cuve intégrant le panier avec les aliments. De l'air chaud est ensuite pulsé dans cette chambre au moyen d'un système de soufflage d'air chaud incorporé dans ledit appareil. L'air chaud pulsé circule dans la chambre et dans la cuve intégrant le panier avec les aliments, assurant ainsi la cuisson des aliments. Une fois la cuisson terminée, l'appareil de cuisson peut être ouvert pour extraire le panier contenant les aliments cuits ; une poignée de manipulation est assujettie au panier afin de pouvoir l'extraire de la cuve sans se brûler et retirer les aliments cuits.

Sur certains modèles d'appareils de cuisson du type friteuse à air chaud, la cuve est amovible du corps de l'appareil de cuisson. On citera par exemple les modèles suivants : Philips^{®} HD9220/20 AirFryer^{®} ; Russell Hobbs^{®} 20810-56 ; Aicok^{®} AHF001. L'insertion de la cuve dans le corps et son retrait de celui-ci s'effectuent à la manière d'un tiroir. Cette insertion de la cuve dans le corps permet de fermer l'appareil et de constituer la chambre, intégrant ladite cuve avec le panier placé dans celle-ci et contenant les aliments à cuire. Le panier est manipulé au moyen de sa poignée de manipulation ; lorsque le panier est placé dans la cuve, la poignée de manipulation est positionnée à l'extérieur de la cuve. En outre, un dispositif d'assemblage permet d'assujettir la cuve avec le panier placé dans celle-ci ; l'utilisateur peut ainsi manipuler la cuve avec le panier placé dans celle-ci en saisissant la poignée de manipulation afin de les introduire dans le corps de l'appareil de cuisson ou de les retirer de celui-ci. En fin de cuisson, l'utilisateur tire sur la poignée de manipulation pour retirer du corps la cuve avec le panier, puis il actionne un bouton de commande permettant de désactiver le dispositif d'assemblage, ce qui permet d'extraire le panier avec les aliments cuits hors de la cuve. La manipulation s'effectue sans risque pour l'utilisateur de se brûler la main.

Sur ces divers modèles d'appareils de cuisson du type friteuse à air chaud, le panier dispose d'une capacité définie lui permettant de recevoir une certaine quantité d'aliments. Lorsqu'une quantité plus importante est nécessaire, il convient alors de procéder à une seconde cuisson qui peut durer trente minutes ou plus, alors même qu'une petite quantité d'aliments en supplément aurait suffi. En outre, certains aliments peuvent être un peu trop volumineux par rapport à la capacité du panier, comme par exemple un poulet, ce qui nécessite de le cuire différemment, par exemple dans un four.

Il est connu du document WO2014198040 de disposer d'un système de manipulation qui comporte des moyens de changement de configuration permettant soit de manipuler concomitamment la cuve incorporant le panier, soit de manipuler le panier seul, libéré et dégagé de la cuve, soit de manipuler la cuve seule, libérée et dégagée du panier, de sorte à permettre un premier mode de cuisson d'aliments dans le panier incorporé dans la cuve et un second mode de cuisson d'aliments directement dans la cuve, le panier étant extrait de celle-ci.

En outre, ce système de manipulation comprend une poignée de manipulation, un premier dispositif d'assemblage amovible agencé entre le panier et la poignée de manipulation pour placer la poignée de manipulation sur le panier ou la retirer de celui-ci et un second dispositif d'assemblage amovible agencé entre la cuve et la poignée de manipulation pour placer la poignée de manipulation, assemblée ou non avec le panier, sur la cuve ou la retirer de celle-ci.

Par ailleurs, le premier dispositif d'assemblage amovible comprend une patte de support agencée sur le panier.

Néanmoins, cette patte présente deux extrémités agencées pour être reçues dans deux logements ménagés sur le corps de la poignée, ce qui complique la fabrication à la fois de la patte et de la poignée, et la mise en place de moyens de verrouillage de la poignée sur la patte.

Un des buts de l'invention est de simplifier le premier dispositif d'assemblage entre la patte et la poignée.

### Résumé de l'invention

La présente invention met en oeuvre un appareil de cuisson du type friteuse à air chaud qui permet une augmentation de la capacité de cuisson dudit appareil.

A cet effet, l'invention concerne un appareil de cuisson du type friteuse à air chaud tel que défini par la revendication 1.

Bien entendu, l'appareil de cuisson selon l'invention comprend d'autres caractéristiques semblables aux appareils de cuisson traditionnels qui permettent une insertion de la cuve dans le corps et son retrait de celui-ci, à la manière d'un tiroir. Cette insertion de la cuve dans le corps - avec ou sans le panier, grâce au système de manipulation - permet de fermer l'appareil et de constituer une chambre, intégrant ladite cuve - avec ou sans le panier. Un système de soufflage d'air chaud incorporé dans ledit appareil, permet de pulser de l'air chaud dans cette chambre ; l'air chaud pulsé circule dans la chambre et dans la cuve qui contient ou non le panier, assurant ainsi la cuisson des aliments placés dans la cuve ou dans le panier.

Selon un premier mode de conception de l'appareil de cuisson ne faisant pas partie de l'invention, le système de manipulation comprend une première poignée de manipulation agencée sur la cuve et une seconde poignée de manipulation agencée sur le panier. Le système de manipulation comprend également un dispositif d'assemblage amovible agencé entre le panier et la cuve pour fixer le panier sur la cuve ou le détacher de celle-ci. En outre, la première poignée de manipulation comprend une zone d'encastrement configurée pour réceptionner au moins partiellement la seconde poignée de manipulation lorsque le panier est fixé sur la cuve et permettre une préhension simultanée desdites première et seconde poignées de manipulation. Ainsi, lorsque le panier est placé dans la cuve, le dispositif d'assemblage assure leur assujettissement et les première et seconde poignées de manipulation se confondent pour ne former qu'une seule et même poignée de manipulation qui est saisie par l'utilisateur afin d'engager la cuve avec le panier contenant les aliments dans le corps de l'appareil de cuisson et de les retirer dudit corps en fin de cuisson. Une fois retirés, l'utilisateur saisit uniquement la seconde poignée de manipulation et désactive le dispositif d'assemblage pour séparer le panier de la cuve.

Selon une réalisation de ce premier mode de conception de l'appareil de cuisson ne faisant pas partie de l'invention, le dispositif d'assemblage comprend un corps agencé à l'arrière de la seconde poignée de manipulation, une zone de réception agencée à l'arrière de la première poignée de manipulation pour recevoir le corps lorsque le panier est placé sur la cuve et des moyens de verrouillage permettant la solidarisation du corps logé dans la zone de réception. De préférence, les moyens de verrouillage comprennent une ouverture agencée sur la zone de réception, un loquet agencé sur le corps pour s'engager dans l'ouverture et un mécanisme d'actionnement du loquet.

L'avant et l'arrière sont définis sur l'appareil de cuisson par sa façade qui constitue le côté avant. Ainsi, l'insertion de la cuve - avec ou sans le panier - dans le corps de l'appareil de cuisson s'effectue par la façade en poussant d'avant en arrière. Inversement, le retrait de la cuve - avec ou sans le panier - hors du corps s'effectue par un mouvement d'arrière en avant, en tirant sur ladite cuve.

Selon une réalisation du premier mode de conception de l'appareil de cuisson ne faisant pas partie de l'invention, la seconde poignée de manipulation est montée en liaison pivot sur le corps de sorte à la déplacer dans une position rabattue dans la zone d'encastrement ou dans une position dégagée de la zone d'encastrement. Ce pivotement de la seconde poignée de manipulation facilite la saisie de la poignée dans sa position dégagée pour mettre en place le panier dans la cuve et pour le retirer de celle-ci. On pourrait toutefois envisager d'autres réalisations, par exemple avec une seconde poignée de manipulation fixe vis-à-vis du corps mais munie de moyens de préhension qui facilitent sa saisie indépendamment de la première poignée de manipulation dans laquelle ladite seconde poignée de manipulation est encastrée au moins partiellement.

De préférence, selon cette réalisation précitée, un mécanisme de blocage permet le maintien de la seconde poignée de manipulation dans la position dégagée. Ce blocage permet de sécuriser l'utilisation du panier. En outre, ce blocage facilite le secouage du panier pour remuer les aliments, ainsi que le retournement du panier pour verser les aliments cuits dans un plat.

De préférence, selon cette réalisation précitée, la seconde poignée de manipulation est disposée sensiblement parallèlement à un fond du panier, dans la position dégagée. Cela permet de faciliter la manipulation du panier, notamment lorsqu'il s'agit de secouer le panier pour le mélange des aliments.

De préférence, selon cette réalisation précitée, les moyens de verrouillage sont configurés pour être actionnés par la seconde poignée de manipulation en position dégagée, cet actionnement permettant de désolidariser le corps de la zone de réception. Ainsi, le dispositif d'assemblage est désactivé automatiquement lorsque la seconde poignée de manipulation est déplacée dans sa position dégagée de la zone d'encastrement. On facilite ainsi la manipulation de l'appareil de cuisson. Bien entendu, on pourrait envisager d'actionner les moyens de verrouillage de manière indépendante de la position dégagée de la seconde poignée de manipulation, par exemple au moyen d'un bouton de commande rapporté sur cette seconde poignée de manipulation ou sur le corps agencé à l'arrière de celle-ci.

Selon un second mode de conception de l'appareil de cuisson objet de l'invention, le système de manipulation comprend une poignée de manipulation, un premier dispositif d'assemblage amovible agencé entre le panier et la poignée de manipulation pour placer la poignée de manipulation sur le panier ou la retirer de celui-ci et un second dispositif d'assemblage amovible agencé entre la cuve et la poignée de manipulation pour placer la poignée de manipulation, assemblée ou non avec le panier, sur la cuve ou la retirer de celle-ci. Ainsi, le système de manipulation comprend une seule poignée de manipulation qui peut être fixée sur le panier seulement, sur la cuve seulement ou à la fois sur le panier et sur la cuve.

Selon une réalisation de ce second mode de conception de l'appareil de cuisson objet de l'invention, le premier dispositif d'assemblage amovible comprend une patte de support agencée sur le panier, un logement agencé sur un corps solidaire de la poignée de manipulation pour recevoir la patte et des premiers moyens de verrouillage permettant la solidarisation de la patte logée dans le corps solidaire de la poignée de manipulation. De préférence, les premiers moyens de verrouillage comprennent une gâche agencée sur la patte, un pêne agencé sur le corps solidaire de la poignée de manipulation et un mécanisme d'actionnement du pêne.

Selon une réalisation de ce second mode de conception de l'appareil de cuisson objet de l'invention, le second dispositif d'assemblage amovible comprend un corps solidaire de la poignée de manipulation, une zone de réception agencée sur la cuve pour recevoir le corps et des seconds moyens de verrouillage permettant la solidarisation du corps logé dans la zone de réception. De préférence, les seconds moyens de verrouillage comprennent une ouverture agencée sur la zone de réception, un loquet agencé sur le corps et un mécanisme d'actionnement du loquet.

Selon une conception de l'appareil de cuisson objet de l'invention, le passage du premier mode de cuisson dans le panier au second mode de cuisson dans la cuve permet une augmentation de la capacité de cuisson de l'ordre de 30 à 60 pourcents.

### Brève description des figures

La description ci-après met en évidence les caractéristiques et avantages de la présente invention. Cette description s'appuie sur des figures, parmi lesquelles :

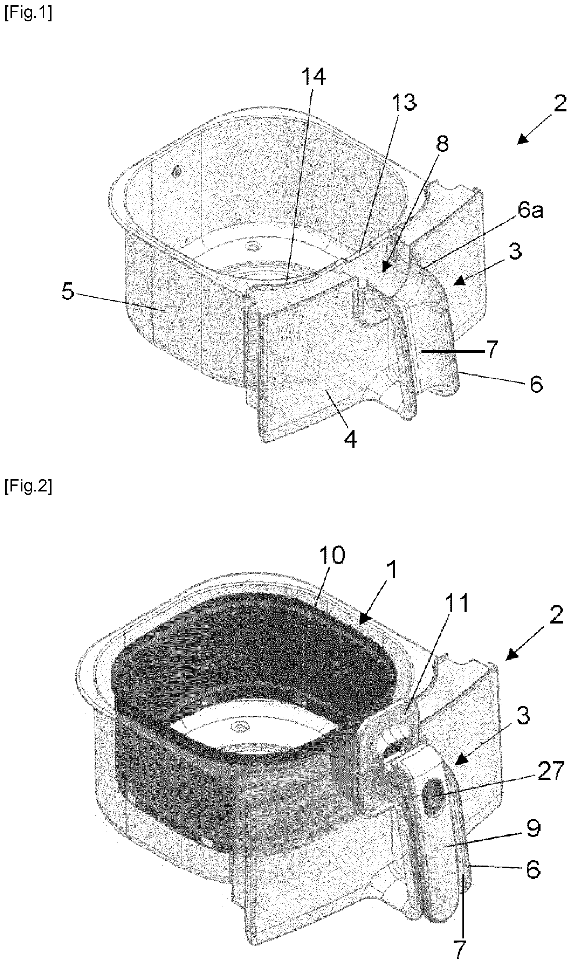

- Les figures 1 à 6
   [Fig.1]
   [Fig.2]
   [Fig.3]
   [Fig.4]
   [Fig.5]
   [Fig.6]
   illustrent une première variante de conception du système de manipulation sur un appareil de cuisson du type friteuse à air chaud, ne faisant pas partie de l'invention ;

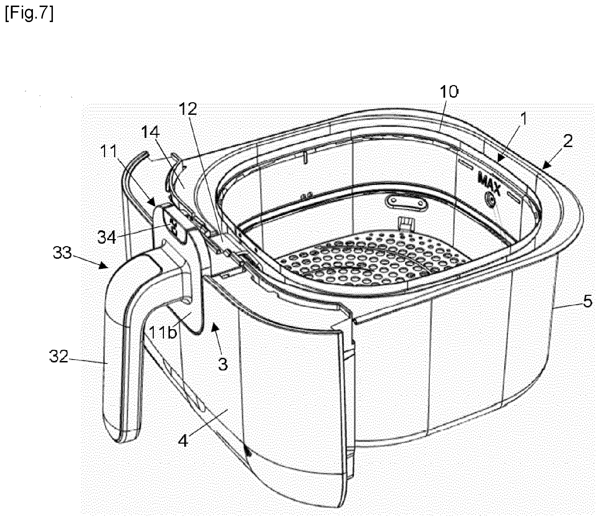

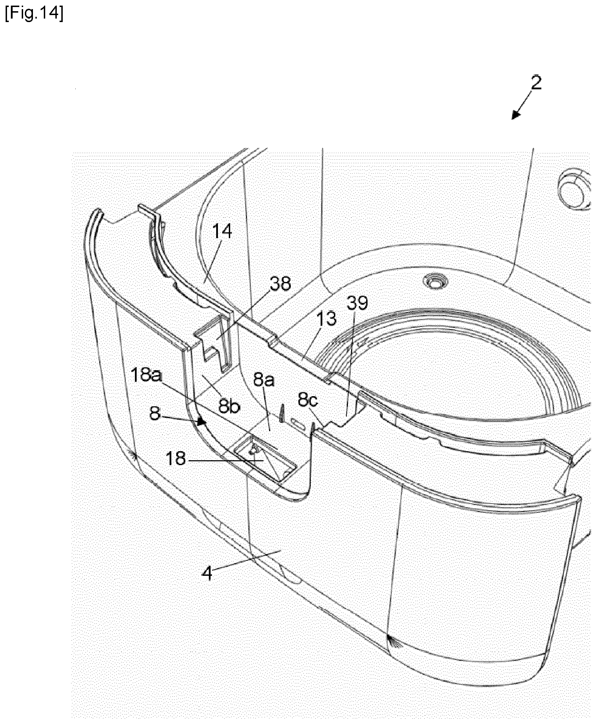

- Les figures 7 à 14
   [Fig.7]
   [Fig.8]
   [Fig. 9]
   [Fig.10]
   [Fig.11]
   [Fig.12]
   [Fig.13]
   [Fig.14]
   illustrent une seconde variante de conception du système de manipulation sur un appareil de cuisson du type friteuse à chaud, objet de l'invention.

### Description détaillée

Dans la description suivante, les mêmes références sont utilisées pour décrire les caractéristiques identiques ou similaires selon les diverses variantes de conception de l'appareil de cuisson du type friteuse à air chaud.

La description suivante et les figures s'attachent à mettre en évidence les caractéristiques essentielles de l'invention qui portent sur le système de manipulation du panier et de la cuve, pris individuellement ou en combinaison, permettant la mise en oeuvre de deux modes de cuisson des aliments avec des capacités différentes, l'un dans la cuve seule et l'autre dans le panier incorporé dans ladite cuve. Les autres caractéristiques (système de soufflage d'air chaud ; corps avec chambre dans laquelle sont insérés la cuve et le panier ... d'un tel appareil de cuisson sont déjà connues, raison pour laquelle elles ne sont pas détaillées ci-après. L'homme du métier pourra se référer aux friteuses à air chaud existant déjà sur le marché, par exemple celles précisées précédemment.

Les figures 1 à 6 montrent une première variante de conception d'un panier 1, d'une cuve 2 et d'un système de manipulation 3 entre le panier 1 et la cuve 2 ne faisant pas partie de l'invention.

Sur la figure 1, la cuve 2 est illustrée seule. Cette cuve 2 comprend une façade 4 disposée à l'avant d'un premier contenant 5. Sur cette façade 4 est aménagée une première poignée de manipulation 6 qui comporte une zone d'encastrement 7. La partie supérieure 6a de la première poignée de manipulation 6 est prolongée vers l'arrière, dans l'épaisseur de la façade 4, par une zone de réception 8.

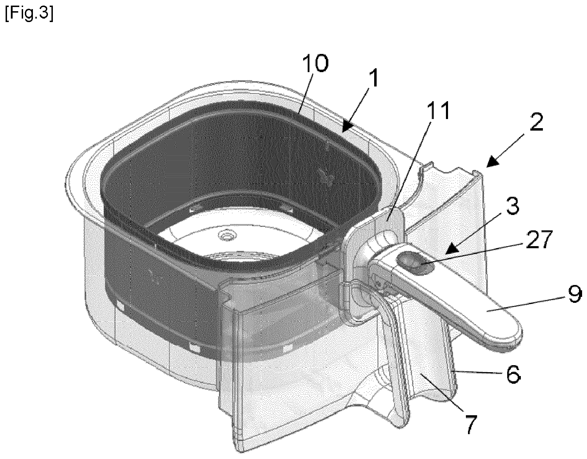

Sur les figures 2 et 3, le panier 1 est placé dans la cuve 2. La cuve 2 comprend une seconde poignée de manipulation 9 disposée à l'avant d'un second contenant 10. La seconde poignée de manipulation 9 est fixée au côté avant 10a du second contenant 10 au moyen d'un corps 11 et d'une patte 12 de support, comme l'illustrent les figures 2, 3 et 6. Lorsque le panier 1 est placé dans la cuve 2, le corps 11 est logé dans la zone de réception 8 et la patte 12 de support vient en appui contre une encoche 13 agencée sur le rebord supérieur 14 du premier contenant 5, en regard de la zone de réception 8.

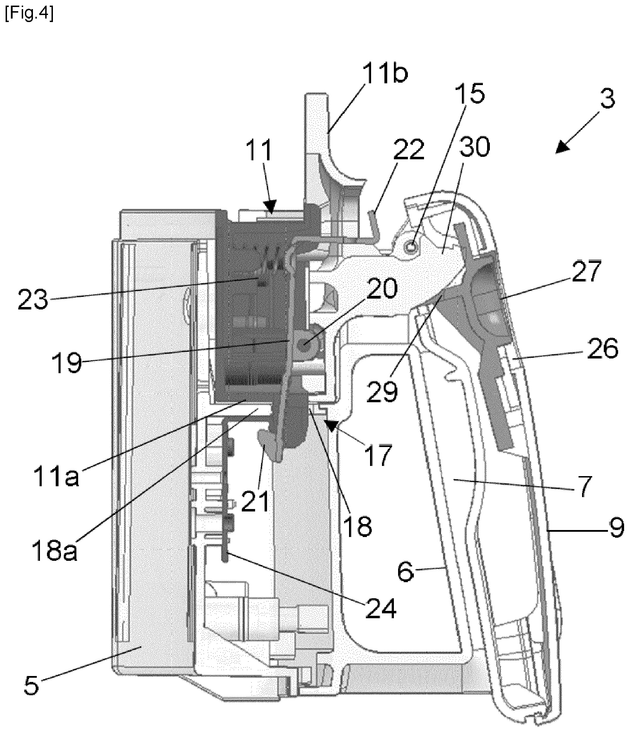

Tel que l'illustrent les figures 1 à 6, la seconde poignée de manipulation 9 est montée en liaison pivot 15 sur le corps 11 pour pivoter dans une position rabattue dans la zone d'encastrement 7 (voir figures 2 et 4) ou dans une position dégagée de la zone d'encastrement 7 (voir figures 3, 5 et 6). Dans cette position dégagée, la seconde poignée de manipulation 9 est positionnée plus ou moins parallèlement au fond 16 du second contenant 10, dans une configuration semblable à celle d'une poêle, pour faciliter le secouage des aliments contenus dans le panier 1. Dans la position rabattue, la seconde poignée de manipulation 9 est intégrée en quasi-totalité dans la zone d'encastrement 7, ce qui permet à la première poignée de manipulation 6 et à la seconde poignée de manipulation 9 de se confondre pour ne former qu'une seule et même poignée de manipulation capable d'être saisie avec une main pour la manipulation de la cuve 2 avec le panier 1 intégré et assemblé avec ladite cuve 2.

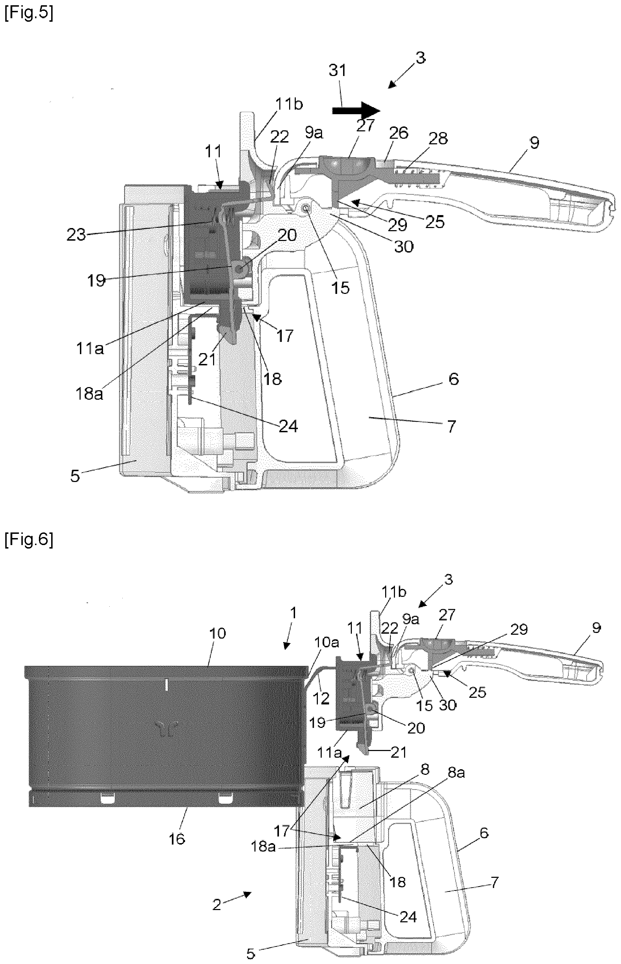

L'assemblage entre le panier 1 et la cuve 2 est mis en oeuvre au moyen d'un dispositif d'assemblage 17 amovible, comme l'illustrent plus en détail les figures 4 à 6. La zone de réception 8 sur la cuve 2 comprend dans sa partie inférieure 8a une ouverture 18. Le corps 11 comprend un loquet 19 qui est monté en liaison pivot 20 à l'intérieur dudit corps 11. Le loquet 19 comprend à son extrémité inférieure une tête 21 formant un crochet, ladite tête 21 étant saillante de la face inférieure 11a du corps 11. De même, le loquet 19 comprend à son extrémité supérieure un doigt recourbé 22 formant un appui, le doigt recourbé 22 étant saillant de la face avant 11b du corps 11. Ce loquet 19 est monté en rappel par un ressort 23 afin d'être ramené automatiquement dans une position normale illustrée en figure 4 lorsque la seconde poignée de manipulation 9 est rabattue dans la zone d'encastrement 7. Lorsque le corps 11 est positionné dans la zone de réception 8, la tête 21 du loquet 19 pénètre dans l'ouverture 18 et vient se loger sous un contour arrière 18a de cette ouverture 18, ce qui permet le verrouillage du corps 11 dans la zone de réception 8. Une patte de renfort 24 en équerre est placée sous le contour arrière 18a, sous laquelle prend appui la tête 21 lors dudit verrouillage. Lorsque la seconde poignée de manipulation 9 est pivotée dans sa position dégagée de la zone d'encastrement 7, un rebord 9a de la seconde poignée de manipulation 9 prend appui contre le doigt recourbée 22, comme illustré en figures 5 et 6, ce qui fait pivoter le loquet 19 et recentre la tête 21 dans l'axe de l'ouverture 18, autorisant ainsi le dégagement du corps 11 hors de la zone de réception 8. Le panier 1 peut ainsi être retiré de la cuve 2, comme le montre la figure 6.

Tel qu'illustré sur les figures 4 à 6, un mécanisme de blocage 25 permet de maintenir la seconde poignée de manipulation 9 dans la position dégagée de la zone d'encastrement 7. La seconde poignée de manipulation 9 comprend une fenêtre 26 dans laquelle est monté en translation un bouton de commande 27. Ce bouton de commande 27 est monté en rappel par un ressort 28 dans une position active illustrée en figures 5 et 6. Le bouton de commande 27 comprend un doigt de butée 29 qui vient prendre appui sur un rebord 30 du corps 11, bloquant ainsi le pivotement de la seconde poignée de manipulation 9 vis-à-vis du corps 11. La translation du bouton de commande 27 dans le sens d'une flèche 31 permet de dégager le doigt de butée 29 du rebord 30, ce qui autorise le pivotement de la seconde poignée de manipulation 9 en position rabattue dans la zone d'encastrement 7. Le pivotement de la seconde poignée de manipulation 9 en position rabattue permet de verrouiller la tête 21 du loquet 19 sous le contour arrière 18a de l'ouverture 18, assurant l'assemblage du panier 1 avec la cuve 2.

Comme le montrent les figures 1 et 6, lorsque le panier 1 est retiré de la cuve 2, la première poignée de manipulation 6 peut tout de même être saisie avec une main, ce qui permet une manipulation de la cuve individuellement, sans aucun risque de se brûler en fin de cuisson. Ainsi, l'utilisateur peut choisir de placer des aliments dans le second contenant 10 du panier 1 qui est alors placé dans la cuve 2 puis inséré avec la cuve 2 dans l'appareil de cuisson. Il peut au contraire choisir de placer des aliments dans le premier contenant 5 de la cuve 2 qui est alors insérée directement dans l'appareil de cuisson, sans le panier 1.

Les figures 7 à 14 illustrent une seconde variante de conception du système de manipulation 3 entre le panier 1 et la cuve 2 objet de l'invention, procurant les mêmes effets que le première variante de conception décrite ci-avant, à savoir offrir deux modes de cuisson, l'un dans la cuve et l'autre dans le panier, afin d'adapter la capacité de cuisson de l'appareil de cuisson. Sur cette seconde variante des figures 7 à 14, on retrouve un grand nombre de caractéristiques identique à la première variante des figures 1 à 6.

Comme l'illustrent les figures 7, 8 et 14, la cuve 2 comprend un premier contenant 5, une façade 4, une zone de réception 8 munie d'une ouverture 18 et une encoche 13 agencée sur le rebord supérieur 14 du premier contenant 5.

Comme l'illustrent les figures 7, 9 et 10, le panier 1 comprend un second contenant 10, un corps 11 et une patte 12 de support fixée sur le côté avant 10a dudit second contenant 10.

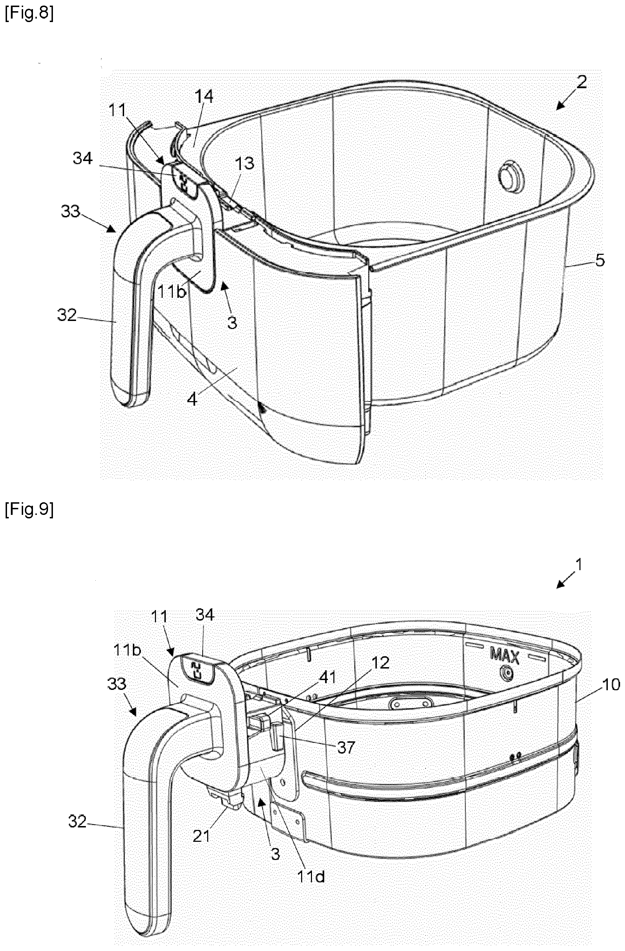

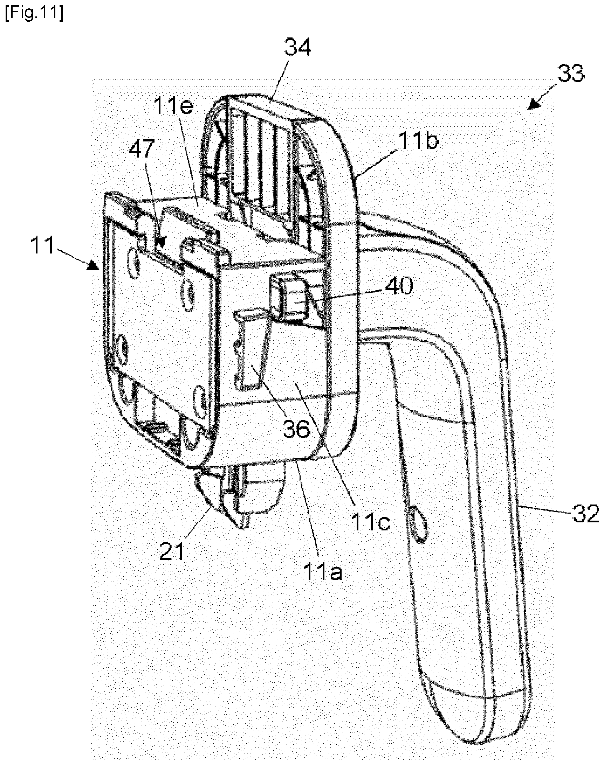

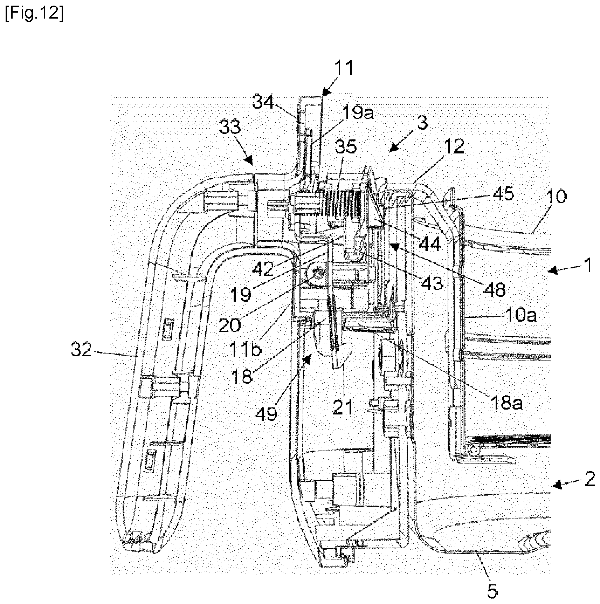

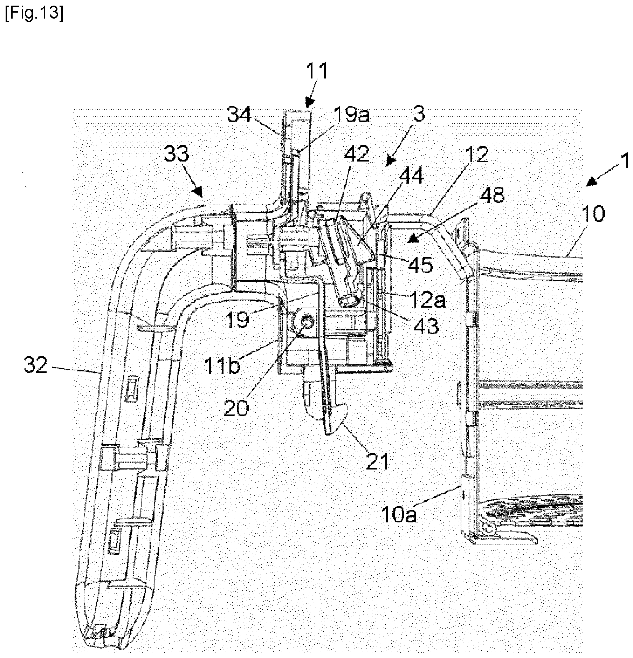

Le système de manipulation 3 mis en oeuvre sur cette seconde variante des figures 7 à 14 diffère de la première variante des figures 1 à 6 en ce qu'il prévoit une seule et unique poignée de manipulation 32, et non une première poignée de manipulation 6 et une seconde poignée de manipulation 9. Comme l'illustrent les figures 7 à 9 et 11 à 13, la poignée de manipulation 32 est fixée à la face avant 11b du corps 11, lesdits éléments formant une seule et même pièce 33 illustrée en figure 11. Cette pièce 33, intégrant la poignée de manipulation 32, peut être assemblée soit simultanément avec le panier 1 et la cuve 2, comme l'illustrent les figures 7 et 12, soit seulement avec le panier 1, comme l'illustrent les figures 9 et 13, soit seulement avec la cuve 2, comme l'illustre la figure 8.

Comme précédemment pour la première variante des figures 1 à 6, selon cette seconde variante des figures 7 à 14, le corps 11 intègre un loquet 19 monté en liaison pivot 20 et comporte à son extrémité inférieure une tête 21 formant un crochet. L'extrémité supérieure 19a du loquet 19 est fixée à un bouton de commande 34 accessible sur la face avant 11b du corps 11, comme le montrent les figures 7 à 9, 12 et 13. L'actionnement du bouton de commande 34 permet de faire pivoter le loquet 19 pour déplacer la tête 21 dans l'axe de l'ouverture 18, permettant ainsi le retrait du corps 11 en dehors de la zone de réception 8. Un ressort 35 assure le rappel du loquet 19 en position de verrouillage, avec la tête 21 disposée sous le contour arrière 18a de l'ouverture 18, comme illustré en figure 12, une fois le corps 11 introduit dans la zone de réception 8 et le bouton de commande 34 relâché. Deux doigts 36, 37 sont agencés sur les côtés latéraux 11c, 11d du corps 11, comme l'illustrent les figures 9 et 11. Ces doigts 36, 37 se positionnent dans des encoches de guidage 38, 39 agencées sur les côtés latéraux 8b, 8c de la zone de réception 8 ; lorsque les doigts 36, 37 sont logés dans les encoches 38, 39, le corps 11 est calé en translation d'avant en arrière vis-à-vis de la zone de réception 8.

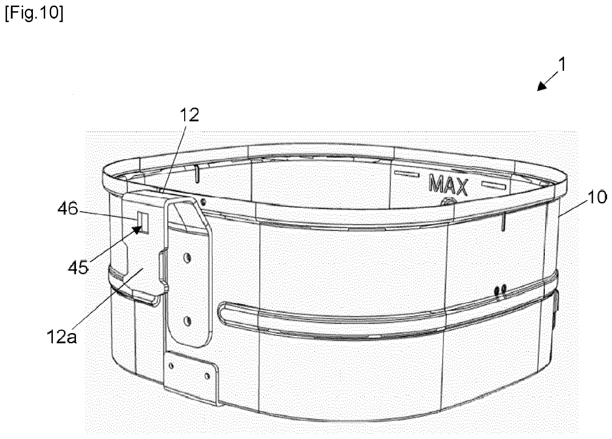

Tel que l'illustrent les figures 9 et 10, la pièce 33 comportant le corps 11 et la poignée de manipulation 32 peut être détachée de la patte 12 de support fixée au second contenant 10. Pour cela, tel que l'illustrent les figures 11 à 13, le corps 11 comprend sur ses côtés latéraux 11c, 11d deux gâchettes 40, 41 qui sont saillantes et formées au moyen d'une seule et même pièce d'actionnement 42 montée en liaison pivot 43 sur ledit corps 11. Cette pièce d'actionnement 42 comprend un pêne 44. La patte 12 de support comprend une gâche 45 formée par un orifice 46 sur une partie recourbée 12a disposée à l'avant de ladite patte 12 de support, comme l'illustre la figure 10. Le corps 11 comprend sur sa face supérieure 11e un logement 47, illustré en figure 11, dans lequel peut pénétrer la partie recourbée 12a de la patte 12 de support. Lorsque la partie recourbée 12a de la patte 12 de support est insérée dans le logement 47, le pêne 44 de la pièce d'actionnement 42 s'engage dans la gâche 45, ce qui verrouille la pièce 33 avec la patte 12 de support et le second contenant 10, formant ainsi le panier 1 équipé de la poignée de manipulation 32. L'activation de l'une ou l'autre des gâchettes 40, 41 permet de dégager le pêne 44 de la gâche 45, comme le montre la figure 13, permettant ainsi l'extraction de la partie recourbée 12a de la patte 12 de support en dehors de la pièce 33. Le rappel du pêne 44 dans une position active illustrée en figure 12 est assurée par le ressort 35.

Ainsi, la pièce 33 peut être assemblée avec le second contenant 10 du panier 1 grâce à un premier dispositif d'assemblage 48 amovible mis en oeuvre au moyen de la pièce d'actionnement 42 dans le corps 11 qui comporte le pêne 44, de la partie recourbée 12a de la patte 12 de support qui comporte la gâche 45, le pêne 44 monté en rappel par un ressort 35 et la gâche 45 assurant le verrouillage du corps 11 avec la patte 12 de support. De même, la pièce 33 peut être assemblée avec le premier contenant 5 de la cuve 2 grâce à un second dispositif d'assemblage 49 amovible mis en oeuvre au moyen du corps 11 incorporant le loquet 19 et de la zone de réception 8 comportant l'ouverture 18, la tête 21 du loquet 19 et le contour arrière 18a de l'ouverture 18 assurant le verrouillage du corps 11 dans la zone de réception 8. Grâce à ces deux dispositifs d'assemblage 48, 49, la pièce 33 peut être assemblée avec le panier 1 seulement, avec la cuve 2 seulement et concomitamment avec le panier 1 et la cuve 2.

La description ci-dessus met en évidence l'objet de l'invention. Celle-ci n'a aucun caractère limitatif, des variantes peuvent être envisagées sans sortir du cadre de l'invention tel que défini par les revendications.

A titre d'exemple, on pourrait prévoir une autre variante selon laquelle le bouton de commande 34 illustré sur la seconde variante des figures 7 à 14 serait agencé de manière identique sur la première variante des figures 1 à 6. Dans ce cas, l'actionnement de la première poignée de manipulation 6 dans la position dégagée vis-à-vis de la zone d'encastrement 7 serait sans effet sur le déverrouillage entre le corps 11 et la zone de réception 8.

De préférence, le premier contenant 5 sur la cuve a une contenance de 4,5 litres et permet de cuire 1,2 kg d'aliments et le second contenant 10 sur le panier 1 a une contenance de 2,2 litres et permet de cuire 800 g d'aliments, ce qui permet une augmentation de la capacité de cuisson de 50 pourcents. On pourra faire varier ces contenances pour disposer d'une augmentation de la capacité de cuisson de l'ordre de 30 à 60 pourcents.

## Revendications

1. Appareil de cuisson du type friteuse à air chaud, lequel comprend un corps principal, une cuve (2) amovible du corps principal, un panier (1) amovible de la cuve et un système de manipulation (3) qui comporte des moyens de changement de configuration permettant soit de manipuler concomitamment la cuve incorporant le panier, soit de manipuler le panier seul, libéré et dégagé de la cuve, soit de manipuler la cuve seule, libérée et dégagée du panier, de sorte à permettre un premier mode de cuisson d'aliments dans le panier incorporé dans la cuve et un second mode de cuisson d'aliments directement dans la cuve, le panier étant extrait de celle-ci, le système de manipulation (3) comprenant une poignée de manipulation (32), un premier dispositif d'assemblage (48) amovible agencé entre le panier (1) et la poignée de manipulation pour placer la poignée de manipulation sur le panier ou la retirer de celui-ci et un second dispositif d'assemblage (49) amovible agencé entre la cuve (2) et la poignée de manipulation pour placer la poignée de manipulation, assemblée ou non avec le panier, sur la cuve ou la retirer de celle-ci, le premier dispositif d'assemblage (48) amovible comprenant une patte (12) de support agencée sur le panier (1), un logement (47) agencé sur un corps solidaire de la poignée de manipulation (32) pour recevoir la patte et des premiers moyens de verrouillage permettant la solidarisation de la patte logée dans le corps solidaire de la poignée de manipulation, **caractérisé en ce que** les premiers moyens de verrouillage comprennent une gâche (45) agencée sur la patte (12) et formée par un orifice (46) sur une partie recourbée (12a) disposée à l'avant de ladite patte (12) de support, le corps (11) comprenant sur sa face supérieure (11e) un logement (47) dans lequel peut pénétrer la partie recourbée (12a) de la patte (12) de support, et un pêne (44) agencé sur le corps (11) solidaire de la poignée de manipulation (32) et un mécanisme (42, 35) d'actionnement du pêne.

2. Appareil de cuisson selon la revendication 1, dans lequel le second dispositif d'assemblage (49) amovible comprend un corps (11) solidaire de la poignée de manipulation (32), une zone de réception (8) agencée sur la cuve (2) pour recevoir le corps et des seconds moyens de verrouillage permettant la solidarisation du corps logé dans la zone de réception.

3. Appareil de cuisson selon la revendication 2, dans lequel les seconds moyens de verrouillage comprennent une ouverture (18) agencée sur la zone de réception (8), un loquet (19) agencé sur le corps (11) et un mécanisme (34, 20, 35) d'actionnement du loquet.

4. Appareil de cuisson selon l'une quelconque des revendications 1 à 3, le passage du premier mode de cuisson dans le panier (1) au second mode de cuisson dans la cuve (2) permet une augmentation de la capacité de cuisson de l'ordre de 30 à 60 pourcents.

## Patentansprüche

1. Kocheinrichtung vom Typ Heißluftfritteuse, das einen Hauptkörper, eine vom Hauptkörper abnehmbare Wanne (2), einen aus der Wanne herausnehmbaren Korb (1) und ein Handhabungssystem (3) umfasst, das Mittel zur Änderung der Konfiguration umfasst, die entweder die gleichzeitige Handhabung der Wanne, in die der Korb eingesetzt ist, oder die Handhabung des Korbs allein, der von der Wanne befreit und freigegeben ist, oder die Handhabung der Wanne allein, die von dem Korb befreit und freigegeben ist, ermöglicht, so dass eine erste Art des Kochens von Lebensmitteln in dem in die Wanne eingesetzten Korb und eine zweite Art des Kochens von Lebensmitteln direkt in der Wanne, wobei der Korb aus der Wanne herausgenommen ist, ermöglicht wird, wobei das Handhabungssystem (3) einen Handhabungsgriff (32), eine erste abnehmbare Verbindungsvorrichtung (48), die zwischen dem Korb (1) und dem Handhabungsgriff angeordnet ist, um den Handhabungsgriff auf dem Korb zu platzieren oder von diesem zu entfernen, und eine zweite abnehmbare Verbindungsvorrichtung (49), die zwischen der Wanne (2) und dem Handhabungsgriff angeordnet ist, um den Handhabungsgriff, zusammengebaut mit dem Korb oder nicht, auf der Wanne zu platzieren oder von dieser zu entfernen, wobei die erste abnehmbare Verbindungsvorrichtung (48) eine auf dem Korb (1) angeordnete Stützlasche (12), eine auf einem mit dem Handhabungsgriff (32) fest verbundenen Körper angeordnete Aufnahme (47) zum Aufnehmen der Lasche und erste Verriegelungsmittel, die die feste Verbindung der in dem mit dem Handhabungsgriff fest verbundenen Körper aufgenommenen Lasche ermöglichen, umfasst, **dadurch gekennzeichnet, dass** die ersten Verriegelungsmittel ein Schließblech (45) umfassen, das an der Lasche (12) angeordnet ist und durch eine Öffnung (46) an einem gebogenen Teil (12a) gebildet ist, der an der Vorderseite der Stützlasche (12) angeordnet ist, der Körper (11) auf seiner Oberseite (11e) eine Aufnahme (47) umfasst, in die der gebogene Teil (12a) der Stützlasche (12) eindringen kann, und einen Bolzen (44), der auf dem Körper (11) fest mit dem Handhabungsgriff (32) angeordnet ist, und einen Mechanismus (42, 35) zum Betätigen des Bolzens.

2. Kocheinrichtung nach Anspruch 1, wobei die zweite abnehmbare Verbindungsvorrichtung (49) einen Körper (11), der fest mit dem Handhabungsgriff (32) verbunden ist, einen Aufnahmebereich (8), der auf der Wanne (2) angeordnet ist, um den Körper aufzunehmen, und zweite Verriegelungsmittel umfasst, die die feste Verbindung des in dem Aufnahmebereich aufgenommenen Körpers ermöglichen.

3. Kocheinrichtung nach Anspruch 2, wobei die zweiten Verriegelungsmittel eine auf dem Aufnahmebereich (8) angeordnete Öffnung (18), einen auf dem Körper (11) angeordneten Riegel (19) und einen Mechanismus (34, 20, 35) zum Betätigen des Riegels umfassen.

4. Kocheinrichtung nach einem der Ansprüche 1 bis 3, wobei der Übergang von der ersten Art des Kochens im Korb (1) zu der zweiten Art des Kochens in der Wanne (2) eine Erhöhung der Kochkapazität in der Größenordnung von 30 bis 60 Prozent ermöglicht.

## Claims

1. Cooking appliance such as a hot air fryer, which comprises a main body, a container (2) which is removable from the main body, a basket (1) which is removable from the container and a handling system (3) which comprises configuration change means making it possible, either to handle the container incorporating the basket together, or to handle the basket individually, released and freed from the container, or to handle the container individually, released and freed from the basket, so as to enable a first mode of cooking foodstuffs in the basket incorporated in the container and a second mode of cooking foodstuffs directly in the container, the basket being extracted from it, the handling system (32), a first removable assembly device (48) arranged between the basket (1) and the handle to place the handle on the basket or remove it from it and a second removable assembly device (49) arranged between the container (2) and the handle to place the handle, assembled or not with the basket, on the container or remove it from it, the first removable assembly device (48) comprising a support tab (12) arranged on the basket (1), a housing (47) arranged on a body integral with the handle (32) to receive the tab and first locking means, enabling the securing of the tab housed in the body integral with the handle, **characterised in that** the first locking means comprise a latch (45) arranged on the tab (12) and formed by an orifice (46) on a curved part (12a) disposed at the front of said support tab (12), the body (11) comprising a housing (47) on its upper face (11e), wherein the curved part (12a) of the support tab (12) can penetrate, and a bolt (44) arranged on the body (11) integral with the handle (32) and a bolt actuation mechanism (42, 35).

2. Cooking appliance according to claim 1, wherein the second removable assembly device (49) comprises a body (11) integral with the handle (32), a receiving zone (8) arranged on the container (2) to receive the body and second locking means enabling the securing of the body housed in the receiving zone.

3. Cooking appliance according to claim 2, wherein the second locking means comprise an opening (18) arranged on the receiving zone (8), a catch (19) arranged on the body (11) and a catch actuation mechanism (34, 20, 35).

4. Cooking appliance according to any one of claims 1 to 3, the passage from the first mode of cooking in the basket (1) to the second mode of cooking in the container (2) enables an increase in cooking capacity of around 30 to 60 percent.
